# EUROPÄISCHE PATENTSCHRIFT

(11) **EP 1 409 909 B1**
(45) Veröffentlichungstag und Bekanntmachung des Hinweises auf die Patenterteilung: **26.03.2008**
(21) Anmeldenummer: 01986886.8
(22) Anmeldetag: 14.12.2001
(51) Int. Cl.: F16L 19/02

(54) **EINRICHTUNG FÜR DAS ANSCHLIESSEN VON VERBINDUNGSSCHLÄUCHEN IN GETRÄNKESCHANKANLAGEN**
DEVICE FOR ATTACHING CONNECTING TUBES IN DRINK DISTRIBUTING SYSTEMS
DISPOSITIF DE RACCORDEMENT DE TUYAUX DE CONNEXION DANS DES INSTALLATIONS DE DISTRIBUTION DE BOISSONS

(30) Priorität: 15.12.2000 DE 10062575
(43) Veröffentlichungstag der Anmeldung: 21.04.2004
(73) Patentinhaber: Vandory, Monika, 5101 Bergheim-Aupoint (AT)
(72) Erfinder: Vandory, Monika, 5101 Bergheim-Aupoint (AT)
(74) Vertreter: Hentschel, Ulrich
(86) Internationale Anmeldenummer: PCT/EP2001/014824
(87) Internationale Veröffentlichungsnummer: WO 2002/063197

(56) Entgegenhaltungen:
- DE-A- 4 227 319
- DE-U- 29 806 956
- US-A- 3 937 496
- US-A- 4 116 477

## Beschreibung

Die Erfindung betrifft eine Einrichtung für das Anschließen der Verbindungsschläuche bei Getränkeschankanlagen an deren Armaturen und Leitungsabzweigungen.

Derartige Einrichtungen bestehen aus einer in ein Endstück eines Verbindungsschlauchs einschiebbaren Tülle und einer der Schlauchtülle zugeordneten Dichtung, die mittels einer Überwurfmutter an einem Gewindeanschlußstutzen einer Getränkeschankanlage, beispielsweise einem Druckminderer, einem Schankhahn, einem Zapfkopf, einem Abstellhahn oder einer Leitungsabzweigung befestigbar sind..

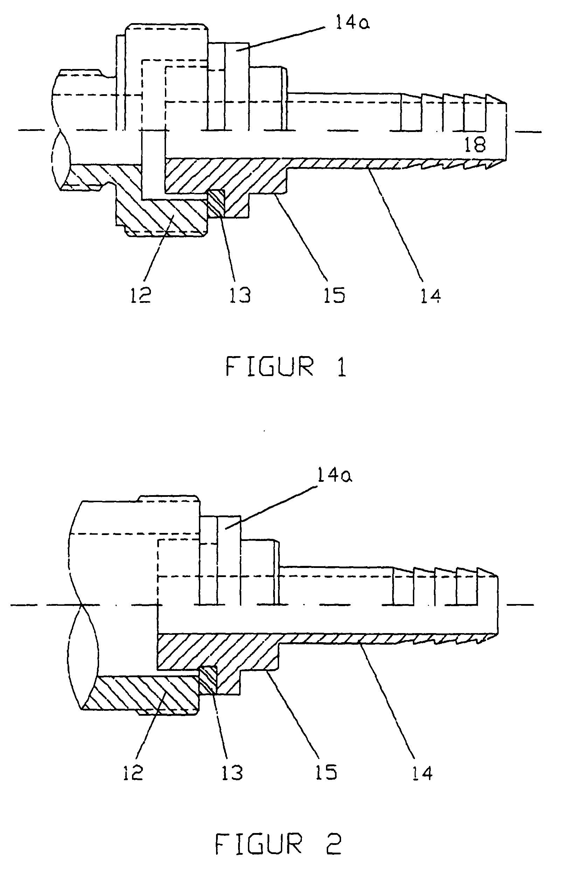

Prinzipiell wird im Fachgebiet angestrebt, eine Schlauchtülle und die ihr zugeordnete Dichtung so zu gestalten und zu bemessen, daß im Bereich des Übergangs von einer Armatur einer Schankanlage zum daran angeschlossenen Verbindungsschlauch während des Betriebs der Schankanlage keine Undichtheiten entstehen. Hierzu ist es üblich, wie Figur 1 zeigt, für Anschlußstutzen 12, deren Auslaß in einer sacklochähnlichen Vertiefung endet, die dem Schlauchanschluß der Tülle 14 abgewandte Kopfseite des Tüllenflansches 14a im Rahmen des kostenmäßig Möglichen der Konfiguration des Einstichs des Anschlußstutzens anzupassen und daran eine mit dem Tüllenflansch und dem Anschlußstutzen zusammenwirkende Flachdichtung 13 anzuordnen. Außer einer Anpassung des Durchmessers an den des jeweiligen Anschlußstutzens wird für die Dichtung, wie die Figuren 1 und 2 erkennen lassen, offensichtlich keine weitere Anpassung der Konfiguration praktiziert. Im Bereich des Übergangs von einer Armatur zur daran angeschlossenen Schlauchleitung bleiben beim obengenannten Stand der Technik Spalte und Querschnittsveränderungen. Letztere insbesondere dann, wenn der Auslaß des Gewindeanschlußstutzens 12, wie beispielsweise an Zapfköpfen üblich, einen durchgehend gleichen Durchmesser, das heißt kein Sackloch im Anschlußbereich, aufweist (Figur 2).

Weil jeder Armaturenhersteller die Gewindeanschlußstutzen seiner Armaturen individuell gestaltet und, soweit vorhanden, deren der Aufnahme der Tüllenköpfe dienenden Ausnehmungen individuell bemißt, existiert im Fachgebiet eine Vielzahl einander verschiedener Bauvarianten von Schlauchtüllen. Die Folge ist, daß jeder Armaturenhersteller gesonderte, entsprechend der Konfiguration der Anschlüsse seiner Armaturen bemessene Schlauchtüllen vertreibt und zu seinen Tüllen passende Dichtungen liefert. Selbst innerhalb des eigenen Produktionsprogramms der Hersteller sind in der Regel die Schlauchtüllen und Dichtungen nicht einheitlich gestaltet und sogar für denselben Armaturentyp kommt es vor, daß, aufgrund im Laufe der Zeit vorgenommener Konstruktionsänderungen am Anschlußstutzen, verschieden bemessene Schlauchtüllen, Dichtungen und teilweise sogar Überwurfmuttern verwendet werden. Um dieses Dilemma teilweise zu umgehen, führen manche Hersteller den in das Sackloch des Anschlußstutzens ragenden Tüllenkopf niedriger aus. Die Höhe des Tüllenkopfes entspricht dann einem Mittelwert, so daß die betreffende Tülle nicht bis zum Boden des Anschlußstutzens reicht und für Anschlußstutzen mit voneinander verschiedenen Tiefen des Sacklochs verwendbar ist. Wegen des konstuktionsbedingten Spalts zwischen den zueinander korrelierenden Oberflächen des Tüllenkopfs und des Sacklochs des Anschlußstutzens entsteht dadurch zwischen dem Boden des Sacklochs und dem des Tüllenkopfes eine aus den vorstehend genannten Gründen unerwünschte Ausweitung des Förderkanals.

Jeder Hersteller von Armaturen für Schankanlagen kann für die auf seine Produkte abgestimmten Einrichtungen für das Anschließen der Verbindungsschläuche nur einen beschränkten Markt erreichen. Mit Tüllen, Dichtungen und Überwurfmuttern die sich nur für das eigene Produktionsspektrum eignen, sind jedoch keine wirtschaftlichen Stückzahlen erreichbar. Das bewirkt, daß deren Fertigung, insbesondere die der Tüllen in Edelstahl, teuer ist und daher zum überwiegenden Teil in der billigeren Ausführung in Messing oder in Messing/vernickelt gefertigt wird.

Die Einzelteile für Schankanlagen kommen aus ganz Europa. So können beispielsweise für ein und dieselbe Schankanlage die Tüllen für den Zapfkopf aus Dänemark, die für den Druckminderer aus Deutschland, die für den Zapfhahn aus Italien und die für die Absperrhahnen aus einem weiteren Land stammen. Weil, wie gesagt, jeder Hersteller für seine Produkte mit individuell konfigurierten Anschlußstutzen arbeitet und hierfür seine eigenen Tüllen vertreibt, werden in der Regel in ein und derselben Schankanlage Tüllen verschiedener Konfiguration verwendet. Dadurch entstehen bei den Wartungsdiensten massive Probleme. Wegen der Unzahl der Bauformen von Tüllen und Dichtungen ist es für einen Wartungsdienst nahezu unmöglich, alle gängigen Teile auf Lager zu halten. Auch ist die Lagerhaltung seltener Bauformen relativ teuer. In praxi führt das dazu, daß im Montage-, Wartungs- oder Reparaturfall im vor Ort vorhandenen Tüllen- und Dichtungsfundus nach möglichst passenden Teilen gesucht wird und im Ergebnis nicht exakt passende Teile eingebaut werden. In der Folge verschlimmern sich im Laufe des Betriebs der Schankanlagen die eingangs genannten, aus den Figuren 1 und 2 ersichtlichen, konstruktiv bedingten Unstetigkeiten des Durchflußquerschnitts im Bereich der Schlauchverbindungen des Leitungssystems. Deren Spalte bilden während des Betriebs der Anlage im Strömungsverlauf unerwünschte Schmutznester, abrupte Querschnittsänderungen, Kanten und Störfelder, an denen sich nicht nur die genannten Schmutzablagerungen bilden können, sondern an denen im Extremfall das in der Leitung fließende Getränk sogar aufreissen und unerwünschten Schaum bilden kann.

Gegenüber dem vorstehend erörterten Stand der Technik liegt der Erfindung die Aufgabe zugrunde, eine qualitativ höherwertige, strömungstechnisch verbesserte, dabei dennoch preiswertere Einrichtung für das Anschließen von Verbindungsschläuchen in Getränkeschankanlagen zu schaffen, mit der die Nachteile der bekannten Einrichtungen vermieden werden und die Möglichkeiten für eine Konfiguration der Tülle und der ihr zugeordneten Dichtbuchsen aufzeigt, die eine Nutzung des Baukastenprinzips ermöglicht.

Diese Aufgabe wird erfindungsgemäß mit den Merkmalen des Gegenstands des Anspruchs 1 gelöst. Weitere vorteilhafte Merkmale des Erfindungsgegenstands ergeben sich aus den Unteransprüchen und aus der Beschreibung.

Die erfindungsgemäße Tüllenanordnung für Schlauchanschlüsse besteht aus einer Tülle und einer mit der Tülle und einem Anschlußstutzen einer Armatur zusammenwirkenden Dichtungsbuchse, die mittels eines Befestigungselements im Anschlußstutzen zusammengehalten werden, indem die Dichtbuchse lose, lediglich durch das Befestigungselement zusammen mit der Tülle im Anschlußstutzen gehalten, an der Tülle angeordnet wird. Dabei korrelieren Dichtung und Tülle der Tüllenanordnung über eine Zentriereinrichtung miteinander, wie der Stecker eines Elektroanschlusses mit der Steckdose für die er vorgesehen ist. In gleicher Weise fügt sich die Tüllenanordnung über die Dichtung in den Anschlußstutzen ein, an den sie zu montieren ist, wodurch mit dem Erfindungsgegenstand über die billiger zu fertigende Dichtung ein paßgenauer Anschluß an die Anschlußstutzen verschiedener Fabrikate und damit unterschiedlicher Konfiguration und unterschiedlicher Maßtoleranzen erzielbar ist.

Ferner wird mit der Lösung gemäß Anspruch 1, erreicht, daß im Hinblick auf den bekannten Stand der Technik die Form der Tüllen vereinfachbar ist. Weil man dank dem Erfindungsgegenstand davon wegkommt, für jedes Fabrikat und jeder dessen Bauarten eine gesonderte Tülle zu brauchen, werden die Tüllen typisierbar und damit in wirtschaftlichen Stückzahlen fertigbar. Wegen der damit verbundenen Ersparnis ist es preislich möglich, die Tüllen aus hochwertigen Materialien zu fertigen.

Das Material der Tüllen ist derzeit größtenteils Messing mit einem geeigneten galvanischen Überzug, günstigstenfalls Edelstahl. Wegen der höheren Fertigungszahlen der erfindungsgemäßen Tülle wird eine Herstellung generell aus Edelstahl oder aus für den Lebensmittelbereich und die Verwendung mit CO₂ geeigneten Kunststoffen möglich.

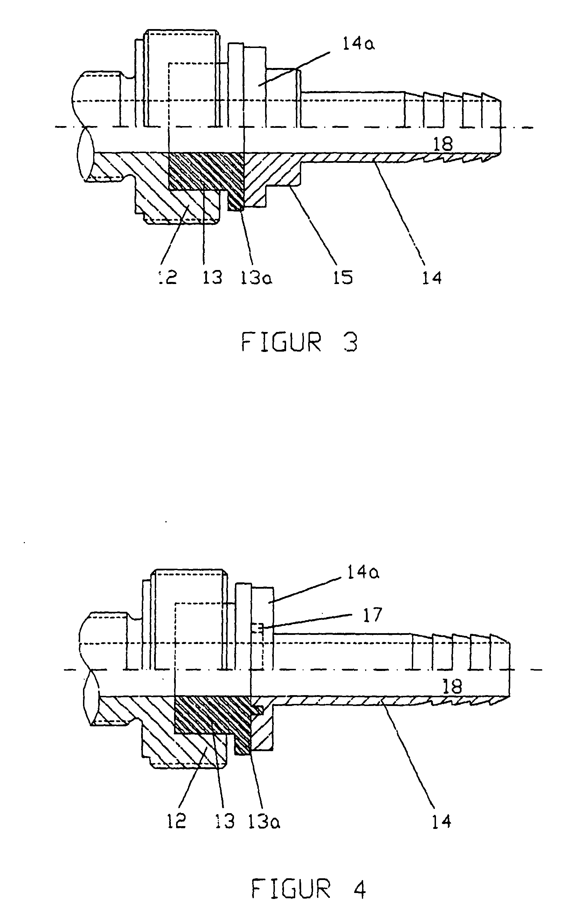

Die Tülle benötigt keinen der Konfiguration des Einstichs am Anschlußstutzen entsprechenden Paßkopf mehr und es ist nicht mehr die teuere, aus Metall gefertigte Tülle an die verschiedenen Konfigurationen der Anschlußstutzen anzupassen, wie das die Figur 1 zeigt, sondern die in der Regel aus Kunststoff bestehende, gesondert gefertigte billigere Dichtungsbuchse (Figuren 3 bis 18).

Die Reduzierung der Tüllenmaße auf die technisch notwendigen ermöglicht es, die Tüllen zu typisieren und im Prinzip nur noch auf das Maß des Durchmessers des Förderkanals 18 auszurichten. Das sind, entsprechend den im Fachgebiet gängigen Schlauchinnendurchmessern, 4, 6, 7 oder 10mm Durchmesser. Das sind lediglich viererlei Tüllen mit den obengenannten Schlauchinnendurchmessern als Nennweite und einem einheitlich bemessenen Flansch. Prinzipiell ist, unter Beachtung der unterschiedlichen Durchmesser der Förderkanäle, ein und derselbe Tüllentyp für jede im Schankgewerbe übliche Armatur verwendbar. Also beispielsweise sowohl für Druckminderer als auch für Schankhähne, Zapfköpfe und Leitungsabzweigungen.

Für Dichtungsbuchsen in Verbindung mit einer 1/2"-Überwurfmutter und einem maximalen Flanschdurchmesser von 18 mm, 5/8" und maximal 20 mm Durchmesser oder 3/4" und maximal 23 mm Durchmesser genügt eine einzige Abmessung für den Tüllenflansch von beispielsweise 18 mm Durchmesser oder auch weniger. Auch die Abmessung des Zentrierbunds 15 kann für die obengenannten Förderkanaldurchmesser der Tüllen, nach Abstimmung auf das Maß der kopfseitigen kreisförmigen Öffnung der Überwurfmutter, gleich bleiben. Die untere Grenze für die Durchmesserabmessung des Tüllenflansches ist dabei das Maß, mit dem gewährleistet ist, daß es die Durchmesserabmessung des Zentrierbundes 15 der Tülle so weit übertrifft, daß das Befestigungselement die Tülle 14 noch zuverlässig an die Dichtbuchse 13 andrücken kann.

Als Befestigungselement dient jeweils eine - wie im Fachgebiet üblich - in der Regel handelsübliche Überwurfmutter. Dies kann eine Sechskantmutter, eine Flügelmutter oder eine Rändelmutter sein. So die kopfseitige kreisförmige Öffnung der Überwurfmutter für jede der vorstehenden drei Gewindeabmessungen mit 14 mm bemessen wird, könnte für eine Tülle mit einem Förderkanaldurchmesser von 10 mm dann beispielsweise der Außendurchmesser des den Schlauch aufnehmenden rohrförmigen Teils der Tülle 12 mm, der Durchmesser des Zentrierbunds 14 mm und der Durchmesser des Tüllenflansches 16 mm betragen. Gegebenenfalls kann auch eine Überwurfmutter mit kleinerer Öffnung als 14 mm, also beispielsweise 12 mm verwendet werden. In diesem Fall erübrigt sich für einen Förderkanaldurchmesser von 10 mm der Zentrierbund 15 an der Tülle.

Die erfindungsgemäße Tüllenanordnung läßt maximal eine vierfache Abdichtung zu. Und zwar zum einen unmittelbar wirkend an zwei Dichtflächen, die in direktem Kraftfluß durch Schließen des Befestigungselements über die Tülle 14 und die Dichtbuchse 13 mit der Dichtkraft beaufschlagbar sind, und zum anderen - soweit ein hinreichend verformbarer Werkstoff der Dichtbuchse 13 Verwendung findet - mittelbar dichtend an maximal zwei weiteren Flächen.

In Richtung der Dichtkraft, das heißt unmittelbar dichtend, sind dies: 1) eine der beiden Stirnflächen der Dichtbuchse 13 zusammen mit der Bodenfläche des Sacklochs im Anschlußstutzen 12 und 2a) die dieser Stirnfläche entgegengesetzte Seite des Flansches 13a der Dichtbuchse 13 zusammen mit der dem Schlauchanschluß abgewandten Fläche des Tüllenflansches 14a, beziehungsweise, soweit die Dichtbuchse 13 keinen Flansch 13a aufweist: 2b) die zweite der beiden Stirnflächen der Dichtbuchse 13 zusammen mit der dem Schlauchanschluß abgewandten Seite des Tüllenflansches 14a.

Dazu können, soweit der Werkstoff der Dichtbuchse hinreichend verformbar ist, als weitere Dichtflächen hinzukommen: 3) durch radiale Verformung der Dichtbuchse, also quer zur Beaufschlagungsrichtung der Dichtkraft, eine Abdichtung im Bereich der Mantelfläche der Dichtbuchse, falls die Maßtoleranzen für den Außendurchmesser der Dichtbuchse und den Innendurchmesser des Anschlußstutzens entsprechend aufeinander abgestimmt sind und 4) durch longitudinale Verformung der Dichtbuchse a) eine Abdichtung im Bereich der Unterseite des Flansches 13a der Dichtbuchse 13 und der Stirnseite des Anschlußstutzens 12, beziehungsweise, so die Dichtbuchse flanschlos ist, b) eine Abdichtung im Bereich des Teils des Tüllenflansches 14a der die Stirnfläche der Dichtbuchse 13 überdeckt, Metall auf Metall zusammen mit der Stirnseite des Anschlußstutzens 12, falls die Länge der Dichtbuchse so bemessen ist, daß sie um ein Maß aus dem Sackloch des Anschlußstutzens herausragt, das im Bereich der elastischen Verformbarkeit der Buchse in Längsrichtung liegt.

In der Regel wird lediglich unmittelbar wirkend über die Stirnflächen der Dichtbuchse, wie vorstehend unter den Ziffern 1), 2a) und 2b) erläutert, zuverlässig abgedichtet.

Als Material für die Dichtungsbuchse eignet sich zunächst jedes für den Lebensmittelbereich als Dichtung geeignete Material. Es soll die für eine ausreichende Dichtwirkung erforderliche Elastizität aufweisen und die für das gewählte Fertigungsverfahren optimalen Verarbeitungseigenschaften haben. Schließlich soll es geeignet sein für einen Kontakt mit CO₂.

Die Dichtungsbuchse ist im Rahmen der erfindungsgemäßen Tüllenanordnung als Adapter zwischen dem Anschlußstutzen einer Armatur und der Tülle ausgebildet. Ihre Konfiguration richtet sich entsprechend der den Figuren 3 bis 18 entnehmbaren Anwendungen danach, ob mit oder ohne Flansch und ob mit oder ohne daran angeordnete Zentriereinrichtung gearbeitet wird.

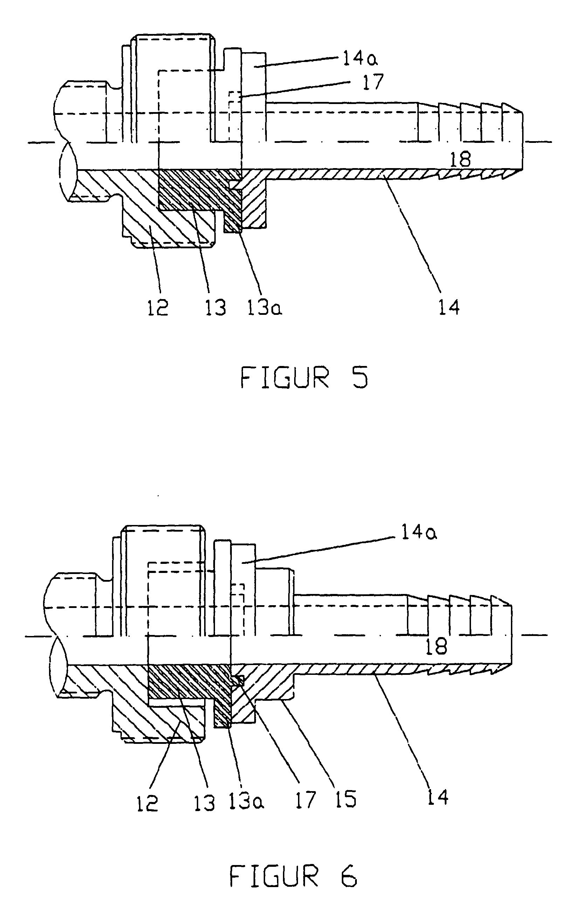

Die Dichtungsbuchse, die den gemäß dem bekannten Stand der Technik mit der Tülle einstückigen Tüllenkopf ersetzt, kann gemäß der Erfindung im als Gegenstück dienenden Anschlußstutzen längs ihrer Mantelfläche formschlüssig geführt angeordnet sein (Figuren 3 bis 5, 8, 9 und 12 bis 18) oder sie kann zusammen mit den Führungseinrichtungen gemäß den Figuren 6, 7, 10, 11 und 12 an der Dichtung zentriert sein.

Grundsätzlich ist vorgesehen, die Dicht- bzw. Flanschflächen sowohl der Tülle als auch der Dichtung als glatte Flanschflächen, also ebenflächig auszuführen. So jedoch die Dichtbuchse nicht für sich längs der Mantelfläche des Anschlußstutzens und die Tülle nicht am Befestigungselement geführt ist, bedarf es am Flansch der Dichtung beziehungsweise der Tülle oder - im Falle der flanschlosen Ausführung der Dichtbuchse - an einer deren Stirnseiten einer Führungseinrichtung, die im Zusammenspiel mit einer entsprechenden Einrichtung am Tüllenflansch zusammenwirkt.

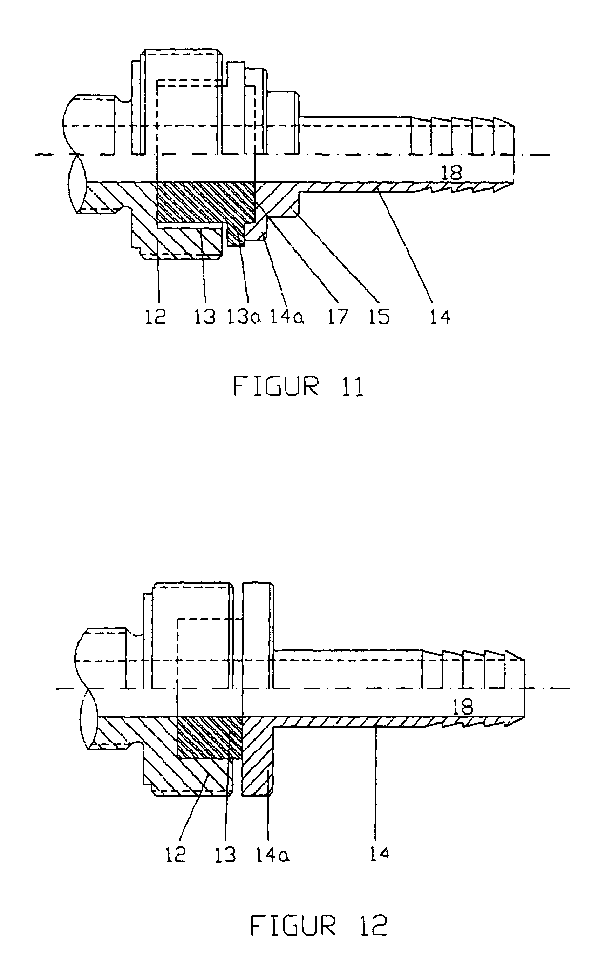

Die ebenflächig ausgebildeten Flansche werden so mit Elementen einer Zentriereinrichtung kombiniert. Die Führung der Tülle erfolgt entweder am Befestigungselement oder an der Dichtbuchse. Eine Führung der Tülle am Befestigungselement zeigen beispielsweise über den Führungsbund 15 die Figur 3 oder über die Mantelfläche der Tülle 14a die Figur 12; eine Führung der Tülle an der Dichtbuchse zeigen beispielsweise die Figuren 4, 5, 8 und 9 in Gestalt verschiedener Bauweisen von mit der Dichtung zusammenwirkenden Zentriereinrichtungen. Darüberhinaus zeigen die Figuren 6, 7, 10 und 11 eine mögliche Kombination einer am Befestigungselement geführten Tülle mit einer an Tülle und Dichtbuchse angreifenden Zentriereinrichtung, wobei, wie im vorstehenden Absatz erwähnt, sich darüberhinaus aus den der Beschreibung entnehmbaren Ausführungsbeispielen durch Kombination deren Einzelelementen sich eine Vielzahl nicht beschriebener Varianten ergibt.

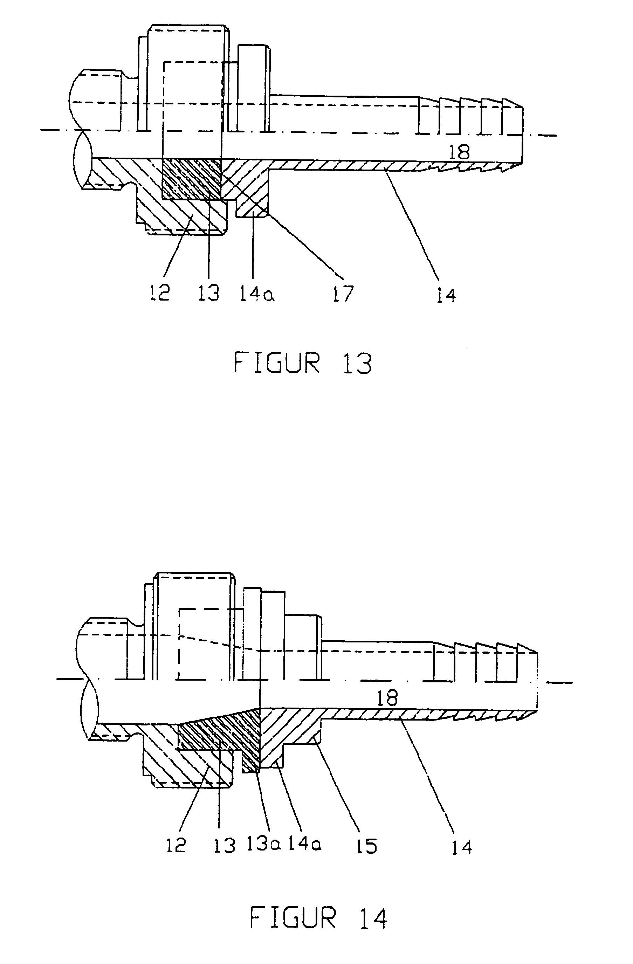

Die Konfiguration der Dichtung richtet sich nach der Einstichtiefe, dem Einstichdurchmesser und dem Durchflußdurchmesser des Anschlußstutzens. Ferner ist es Aufgabe der Dichtungsbuchse, einen stetigen Übergang zwischen voneinander differierenden Anschlußquerschnitten des Anschußstutzens und der Schlauchleitung beziehungsweise der Tülle zu schaffen. So der Durchflußdurchmesser des Anschlußstutzens dem der Schlauchleitung verschieden ist, adaptiert die Dichtungsbuchse diesen Querschnittsunterschied, indem der Förderkanal der Dichtbuchse bei 13b konisch verläuft (Figuren 14 bis 18). Dadurch, daß die Dichtungsbuchse 13 den Querschnitts- unterschied zwischen dem Anschlußstutzen 12 und der Tülle, beziehungsweise dem Schlauch adaptiert, wird ein strömungsgünstiger Übergang vom Innendurchmesser des Anschlußstutzens 12 zu dem der Schlauchleitung gewährleistet. Mit diesen Maßnahmen wird ein Strömungsabriß des die Dichtungsbuchse durchströmenden Getränks vermieden und damit dessen Aufschäumen in der Leitung.

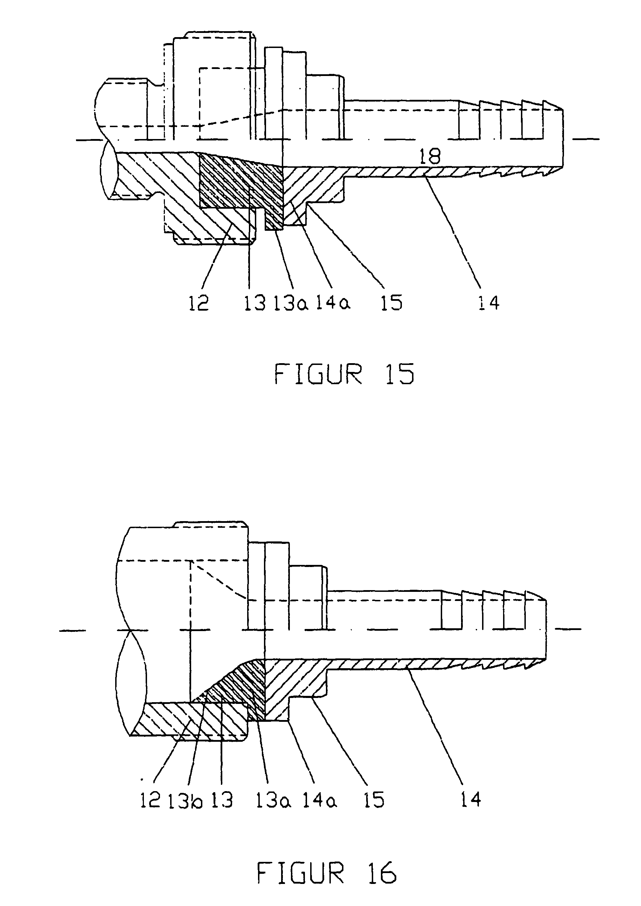

Einfachstenfalls hat die Dichtbuchse Zylinderform. Sie kann gemäß Anspruch 2 aber auch einseitig mit einem Flansch versehen sein. Ein Flansch ist zumindest dann nötig, wenn die Dichtbuchse in einem Gewindeanschlußstutzen gemäß den Figuren 16 bis 18 eingesetzt wird, wie er beispielsweise für Zapfköpfe üblich ist. Weil am Zapfkopf lediglich eine durchgehende Anschlußleitung existiert und die aus den Figuren 3 bis 15 ersichtliche Grundfläche des Sacklochs im Anschlußstutzen fehlt, liegt die einzige Dichtfläche der Dichtung an deren Flansch. Wegen des damit verbundenen günstigeren Strömungsverlaufs ist im Rahmen der Erfindung das in die Leitung hineinragende Ende der Dichtung mit einer nach innen verlaufenden Schrägfläche versehen.

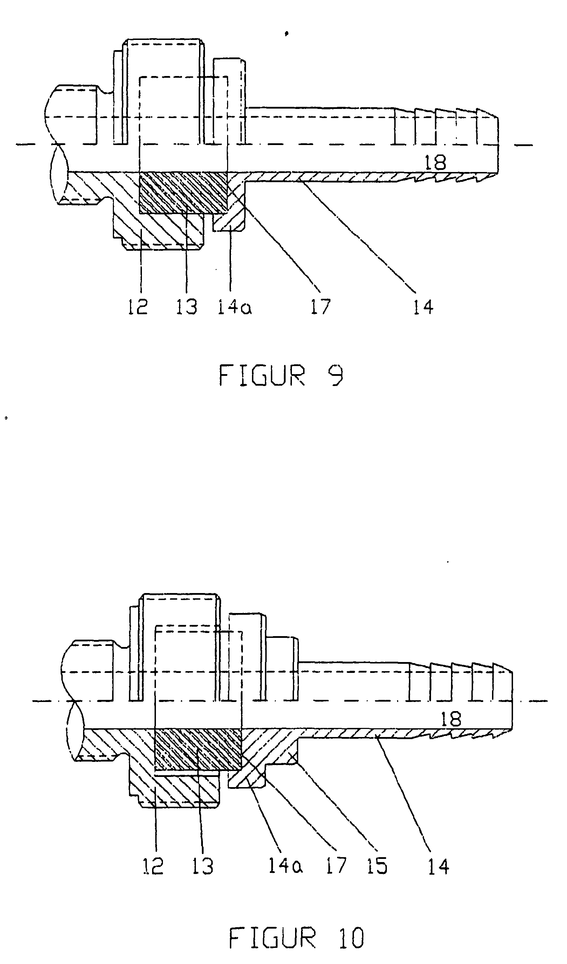

Verglichen mit den anderen, bieten die Versionen die besten Möglichkeiten für eine Systematisierung des Tüllen/Dichtungssystems, bei denen die Dichtungsbuchse an der vom Befestigungselement geführten Tülle geführt wird (siehe zum Beispiel Figuren 10, 11 und 18). Dies, weil hier seitens der Dichtung lediglich eine maximale Einstichtiefe, ein minimaler Einstichdurchmesser und der Durchflußdurchmesser des Anschlußstutzens sowie der Schlauchinnendurchmesser beachtet werden müssen, die individuelle Einstichtiefe und der individuelle Einstichdurchmesser des Anschlußstutzens dagegen weitgehend unbeachtlich bleibt. Das heißt, innerhalb eines Baukastensystems haben sich Durchmesser und Länge der Dichtbuchse lediglich nach dem Anschlußstutzen mit dem kleinsten Sacklochdurchmesser und nach dem Anschlußstutzen mit der größten Sacklochtiefe zu richten, an den die Tüllenanordnung angeschlossen werden soll. Zu dem kommt für flanschlose Dichtbuchsen mit einer Konizität 13b, daß sie durch Schwenken um 180° sowohl für einen Übergang von einem großen auf einen kleinen Durchmesser des Förderkanals als auch umgekehrt verwendbar sind. Die zur Achse des Förderkanals zentrische Ausrichtung übernimmt für die Anschlußstutzen mit den größeren Sacklochdurchmessern die Tülle; die Dichtbuchse ragt mit ihrem oberen Ende aus dem Sackloch des Anschlußstutzens heraus. Dank dieser universellen Verwendbarkeit der Dichtbuchse kann eine solche Tüllenanordnung weitgehend unabhängig von der Konfiguration und den Maßtoleranzen der Anschlußstutzen verschiedener Hersteller nach einem Baukastensystem bemessen werden. Schließlich kann die Typenvielfalt der Dichtbuchsen kleiner gehalten werden, indem für einen bestimmten Durchflußdurchmesserbereich der Anschlußstutzen ein gemeinsamer Außendurchmesser für die Dichtbuchse gewählt wird.

Durch Kombination der anhand der Figuren 3 bis 18 beschriebenen Konstruktionselemente umfaßt die Erfindung für jedes der Ausführungsbeispiele im Rahmen der Äquivalenzen eine Vielzahl expressis verbis nicht beschriebener weiterer Varianten der erfindungsgemäßen Tüllenanordnung als da beispielsweise sind: Kombination der beschriebenen Ausführungsbeispiele mit einer Dichtbuchse mit oder ohne Flansch; einer Führung der Tülle am Befestigungselement über einen Führungsbund 15 oder über die Mantelfläche des Tüllenflansches 14a; einer Führung der Dichtbuchse über deren Mantelfläche im Anschlußstutzen oder einer Führung der Dichtbuchse an der Tülle oder umgekehrt einer Führung der Tülle an der Dichtbuchse; belassen der beidseitig ebenen Dichtflächen gemäß Figur 12 (wobei die Dichtbuchse ebenfalls einen Flansch haben könnte) oder deren Kombination mit den verschiedenen Varianten der Zentriereinrichtung.

Demgegenüber könnte die Dichtbuchse 13 mit der Tülle 14 bleibend verbunden im Anschlußstück angeordnet sein. Diese Version kann dank ihres im Gegensatz zum Stand der Technik (Figuren 1 und 2) elastischen Tüllenkopfes nahezu spaltfrei im Anschlußstück anliegen und ist gleichzeitig billiger zu fertigen als der eingangs erörterte Stand der Technik, weil nicht die Konfiguration des Tüllenkopfs einzeln an die des Anschlußstutzens anzupassen ist, sondern lediglich die separat hergestellte und anschließend mit der Tülle fest verbundene Dichtung. Die aus Dichtung und Tülle bestehende Tüllenanordnung weist jedoch nicht die vorstehend, am Beispiel der Tülle, genannten Vorteile bei der Typisierung, Lagerhaltung und Systematisierung auf.

Die Erfindung wird anschließend anhand mehrerer Ausführungsbeispiele, teilweise anhand der nachstehend genannten Zeichnungen, näher erläutert. Die Zeichnungen zeigen in schematischer Darstellung:
- Figur 1: eine Tüllenanordnung nach dem Stand der Technik für einen mit einem Sackloch endenden Anschlußstutzen,
- Figur 2: eine weitere Tüllenanordnung nach dem Stand der Technik für einen Anschlußstutzen mit geradem Auslaß,
- Figur 3: eine erste Ausführungsform der erfindungsgemäßen Tüllenanordnung,
- Figur 4: eine Variante einer zweiten Ausführungsform der erfindungsgemäßen Tüllenanordnung,
- Figur 5: eine weitere Variante der zweiten Ausführungsform gemäß Figur 4,
- Figur 6: eine erste Variante einer dritten Ausführungsform der erfindungsgemäßen Tüllenanordnung,
- Figur 7: eine weitere Variante der dritten Ausführungsform gemäß Figur 6,
- Figur 8: eine Variante einer vierten Ausführungsform der erfindungsgemäßen Tüllenanordnung,
- Figur 9: eine weitere Variante der vierten Ausführungsform gemäß Figur 8,
- Figur 10: eine Variante einer fünften Ausführungsform der erfindungsgemäßen Tüllenanordnung,
- Figur 11: eine weitere Variante der fünften Ausführungsform gemäß Figur 10,
- Figur 12: eine sechste Ausführungsform der erfindungsgemäßen Tüllenanordnung,
- Figur 13: eine siebte Ausführungsform der erfindungsgemäßen Tüllenanordnung
- Figur 14: eine erfindungsgemäße Dichtbuchse als Adapter zwischen zwei Leitungsdurchmessern verschiedenen Querschnitts (erste Variante),
- Figur 15: eine erfindungsgemäße Dichtbuchse als Adapter zwischen zwei Leitungsdurchmessern verschiedenen Querschnitts (zweite Variante),
- Figur 16: eine erste Variante der erfindungsgemäßen Tüllenanordnung an einem Anschlußstutzen ohne Sackloch als achtes Ausführungsbeispiel,
- Figur 17: eine zweite Variante des achten Ausführungsbeispiels,
- Figur 18: eine dritte Variante des achten Ausführungsbeispiels.

Die mit den Figuren 3 bis 18 dargestellten Gegenstände zeigen jeweils einen Anschlußstutzen 12 in Verbindung mit einer aus Dichtung 13 und Tülle 14 bestehenden, an den Anschlußstutzen angefügten Tüllenanordnung, deren Tülle einen mit einem nicht gezeichneten Befestigungselement zusammenwirkenden beidseitig glatten Flansch 14a aufweist sowie - abhängig vom Anwendungsbeispiel - einen Zentrierbund 15 und/oder eine mit der Dichtungsbuchse 13 zusammenwirkende Zentriereinrichtung 16 beziehungsweise 17. Zentriereinrichtung kann auch die Mantelfläche des Tüllenflansches sein. Der vom Anschlußstutzen, der Dichtung und der Tülle umschlossene Förderkanal ist jeweils mit 18 bezeichnet.

Wie die Figuren zeigen, ragt die Dichtbuchse 13 jeweils aus dem Sackloch des Anschlußstutzens heraus. Mit dieser Maßnahme und der Wahl eines einheitlichen Dichtbuchsendurchmessers ist die weitestgehende Typisierung der Dichtung und das effektivste Baukastensystem möglich. Ein Überstand der Dichtungsbuchse aus dem Sackloch des Anschlußstutzens hat ferner den Vorteil, daß vor dem Aufsetzen der Überwurfmutter erkennbar ist, ob mit der in das Sackloch des Anschlußstutzens eingesetzten Dichtbuchse eine zuverlässige Dichtwirkung erzielbar ist oder nicht.

Als Befestigungselement dient eine handelsübliche Überwurfmutter mit einem Bohrungsdurchmesser von in der Regel 14 mm am kopfseitigen, überdeckten Ende der Mutter und den im Fachgebiet üblichen Gewindedurchmessern von 1/2" oder 5/8" oder 3/4".

Die Figuren 1 und 2 haben die im Fachgebiet vorgefundene Paxis zum Inhalt. Die Tülle 14 weist einen über den Flansch 14a hinausragenden Tüllenkopf auf. Dieser Tüllenkopf hat die Aufgabe, das sich dem Förderkanal 18 des Anschlußstutzens 12 anschließende Sackloch (Figur 1) auszufüllen und die Dichtung 13 aufzunehmen. Die Dichtung wird in der Regel in einer dem Flansch 14a benachbarten Nut am Tüllenkopf montiert. Wegen der in der Beschreibungseinleitung bereits geschilderten Kostenzwänge ist es in der Regel nicht möglich, im Förderkanal zwischen Tüllenkopf und Anschlußstutzen Unstetigkeiten der Querschnittsabmessung und Kanten zu vermeiden, was - wie in der Beschreibungseinleitung erläutert - zu Strömungsabriß des im Förderkanal strömenden Getränks und/oder zu unerwünschten Schmutznestern führt, die mit den im Fachgebiet üblichen Reinigungsmaßnahmen nicht beseitigbar sind.

Die Figur 3 zeigt eine erste Ausführungsform der erfindungsgemäßen Tüllenanordnung. Die Tülle 14 ist hier über den Führungsbund 15 am Befestigungselement geführt, während die Dichtungsbuchse über ihre Mantelfläche im Anschlußstutzen geführt ist. Die Dichtungsbuchse kann auch ohne Flansch ausgeführt sein. In diesem Fall ist ihre Länge so zu bemessen, daß ihre Stirnfläche das Sackloch des Anschlußstutzens überragt.

Die Figuren 4 und 5 haben eine zweite Ausführungsform zum Inhalt. Die Führung der Tülle 14 geschieht hier an einer Führungsnut, beziehungsweise an einem Führungsflansch 16, 17 über die Dichtungsbuchse. Die Dichtungsbuchse 13 ist über ihre Mantelfläche im Anschlußstutzen geführt. Der Führungsbund 15 entfällt hier. Der Dichtungsflansch 13a kann, wie bei der ersten Ausführungsform auch, entfallen. Die Zentriereinrichtung 16, 17 kann auf einem beliebigen Durchmesser angeordnet sein. Vorzugsweise wird jedoch ein für alle mit dem Erfindungsgegenstand realisierten Durchmessermaße des Förderkanals 18 gemeinsames Durchmessermaß gewählt, gemäß dem die Zentriereinrichtung 16, 17 an der Tülle beziehungseise an der Dichtung angeordnet wird.

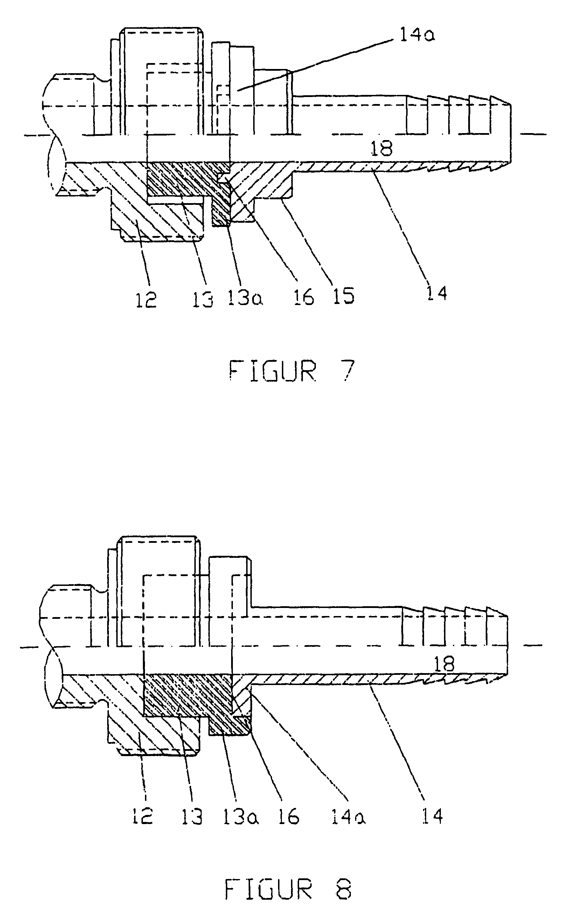

Die Figuren 6 und 7 zeigen eine dritte Ausführungsform des Erfindungsgegenstandes. Bei dieser Ausführungsform wird die Tülle 14, wie beim ersten Ausführungsbeispiel, über den Führungsbund 15 am Befestigungselement zentriert. Die Dichtungsbuchse 13 ist über eine Zentriereinrichtung in Form eines Führungsbunds 16 oder über eine Führungsnut 17 am Flansch 14a der Tülle 14 geführt. Für die Ausführung der Dichtbuchse mit oder ohne Flansch und die Lage der Zentriereinrichtung 16, 17 gilt das für die vorhergehenden Ausführungsbeispiele Gesagte. Die Dichtung 13 dichtet im Rahmen dieses dritten Ausführungsbeispiels an ihren beiden Frontseiten ab.

Beim nachfolgend erörterten, in den Figuren 8 und 9 der Zeichnung gezeigten vierten Ausführungsbeispiel wird die Tülle 14 an der Dichtung 13 geführt. Als Zentriereinrichtung dient hier eine Mantelfäche des Tüllenflansches 14a. Für die Variante gemäß Figur 8 ist ein möglichst kleiner Außendurchmesser für den Tüllenflansch 14a, also zum Beispiel 16 mm, vorzusehen. Eine Stirnseite der Dichtungsbuchse 13 oder, soweit die Dichtungsbuchse einen Flansch aufweist, deren Flansch 13a, weist eine sacklochartige Vertiefung auf. Deren Innendurchmesser und der Außendurchmesser des Flansches 14a sind im Rahmen der Toleranzen gleich. Die Vertiefung in der Dichtbuchse 13 umschließt den Flansch 14a der Tülle 14, so daß die Dichtbuchse 13 an einer ihrer Stirnseiten über die Mantelfäche des Tüllenflansches 14a hochgezogen ist, derart, daß das Befestigungselement einerseits die Tülle festhält und andererseits die Dichtungsbuchse dichtend an den Anschlußstutzen drückt. Wegen des geringeren Durchmessers des Flansches wird Tüllenmaterial gespart. Weil der schlauchseitige Führungsbund 15 sowie die dichtbuchsenseitige Führungsnut oder der Führungsbund 16, 17 entfallen, weist diese Tülle einen beidseitig glatten Flansch auf, ohne zusätzliche Zentrierungseinrichtung, und ist daher billig zu fertigen. Selbstverständlich ist die vorstehend als viertes Ausführungsbeispiel beschriebene sacklochartige Vertiefung anstatt im Flansch 13a der Dichtungsbuchse 13 alternativ im Flansch 14a der Tülle 14 anordbar (Figur 9). In diesem Fall ist der Tüllenflansch entsprechend größer zu gestalten. An der Dichtbuchse dagegen kann der Flansch entfallen.

Das Ausführungsbeispiel fünf gemäß den Figuren 10 und 11 unterscheidet sich vom Ausführungsbeispiel vier durch die Anordnung eines Führungsbunds 15 am Tüllenflansch bei gleichzeitigem Vorhandensein eines dichtungsseitigen Sacklochs 17. Bei dieser Ausführung ist die Tülle geringfügig komplizierter gestaltet. Dafür läßt sich jedoch die Zahl der benötigten Dichtungsbuchsen vermindern, weil die Bemessung der Dichtbuchse vom Innendurchmesser des Sacklochs am Anschlußstutzen unabhängig wird, das heißt für einen ganzen Durchmesserbereich des Sacklochs des Anschlußstutzens lediglich eine Dichtbuchse gebraucht wird. Die Dichtbuchse dichtet hier an den Stirnflächen ab. Ohne Flansch sind die Dichtungsbuchsen durch bloßes Schwenken um 180° in zwei einander entgegengesetzte Strömungsrichtungen einsetzbar. Dies hat im Rahmen der erfindungsgemäßen Typisierungssystems den Vorteil, daß zur Adaptierung des Förderkanals an Strömungsquerschnitte verschiedenen Durchmessers nur halb so viele Typen von Dichtbuchsen benötigt werden.

Das sechste, in Figur 12 der Zeichnung wiedergegebene Ausführungsbeispiel beinhaltet eine Führung der Tülle 14 längs der Mantelfläche des Tüllenflansches 14a mittels des Befestigungselements für die Tüllenanordnung. Die Tülle gemäß Beispiel 6 läßt sich nicht so rationell typisieren wie die der Ausführungsbeispiele 1 bis 5. Der Tüllenflansch gemäß Figur 12 kann im allgemeinsten Fall einen beidseitig flachen Flansch aufweisen, weil hier dessen Mantelfläche als Zentriereinrichtung dient. Also einen Flansch 14a ohne Bund 15, Ansatz 16 oder Nut 17. Im Rahmen einer Unterkombination dieses Ausführungsbeispiels kann der Flansch 14a selbstverständlich auch einen Bund 16 oder eine Nut 17 aufweisen, so daß die Dichtungsbuchse 13, wie bei dem Ausführungsbeispiel gemäß den Figuren 6 und 7, über die Tülle im Anschlußstutzen zentrierbar ist und weniger Bauformen für die Dichtungsbuchse nötig sind. Im Vergleich zu den vorstehend erörterten Ausführungsbeispielen sind jedoch mehr Tüllenbauformen nötig. Dies, weil die Nennmaße der Tülle nicht nur auf dem Durchflußdurchmesser der Schlauchleitung basieren, sondern darüberhinaus noch auf dem Außengewindedurchmesser des Anschlußstutzens. Das heißt: Um die erfindungsgemäße Tüllenanordnung auf Basis dieses letzteren Ausführungsbeispiels zu typisieren, sind - allein schon bezogen auf die gängigsten Durchmesser von 6, 7 und 10 mm - Tüllenformen basierend auf insgesamt sechs Nennmaßen und deren Kombinationen nötig.

Die Figur 13 zeigt ein siebtes Ausführungsbeispiel der Erfindung. Die erfindungsgemäße Systematisierung der übrigen Beispiele ist bei diesem siebten Beispiel aus Platzgründen erschwert. Die Tülle 14 ist über die Mantelfläche der höckerartigen Erhöhung 17 des Tüllenflansches 14a im Sackloch des Anschlußstutzens 12 geführt. Infolge des Abstandes des Tüllenflansches von der Frontfläche des Anschlußstutzens ist erkennbar, ob auf die von außen nicht sichtbare Dichtung eine ausreichende Dichtkraft aufbringbar ist oder nicht. Soweit die Länge der Dichtungsbuchse hierfür ausreicht, kann die Bohrung der Dichtungsbuchse zur Schaffung stoßfreier Übergänge zwischen zwei verschieden großen Anschlußdurchmessern konisch verlaufen. Soweit der Platz ausreicht, kann im Rahmen der Erfindung die Tülle über die höckerartige Erhöhung 17 an der im Anschlußstutzen geführten Dichtung zentriert werden oder umgekehrt, so daß sich der Durchmesser der Dichtung lediglich nach dem Durchmesser des Anschlußstutzen mit dem engsten Sackloch zu richten hat.

Die Figuren 14 und 15 zeigen die erfindungsgemäße Dichtungsbuchse in ihrer Eigenschaft als Adapter zwischen zwei Förderkanälen verschiedenen Durchmessers. Diese Adaptereigenschaft der erfindungsgemäßen Dichtungsbuchse gilt für alle vorstehend beschriebenen fünf Ausführungsbeispiele der Erfindung.

Die Figuren 16 bis 18 zeigen als achtes Ausführungsbeispiel eine Tüllenanordnung für den Gewindeanschlußstutzen einer durchgehenden Anschlußleitung, wie sie beispielsweise für Zapfköpfe üblich ist. Weil an diesem Gewindeanschlußstutzen das aus den Figuren 3 bis 15 ersichtliche Sackloch und dessen Grundfläche fehlt, können bei dieser Anwendung nur Dichtbuchsen mit Flansch verwendet werden. Die Dichtbuchse dichtet mit ihrem Flanschbereich. Die Schrägfläche 13b hat, wie bereits mit den Figuren 14 und 15 gezeigt und für die Ausführungsbeispiele eins bis sieben geltend, die Aufgabe adaptierend zu wirken, indem ein stetiger Durchmesserübergang geschaffen wird.

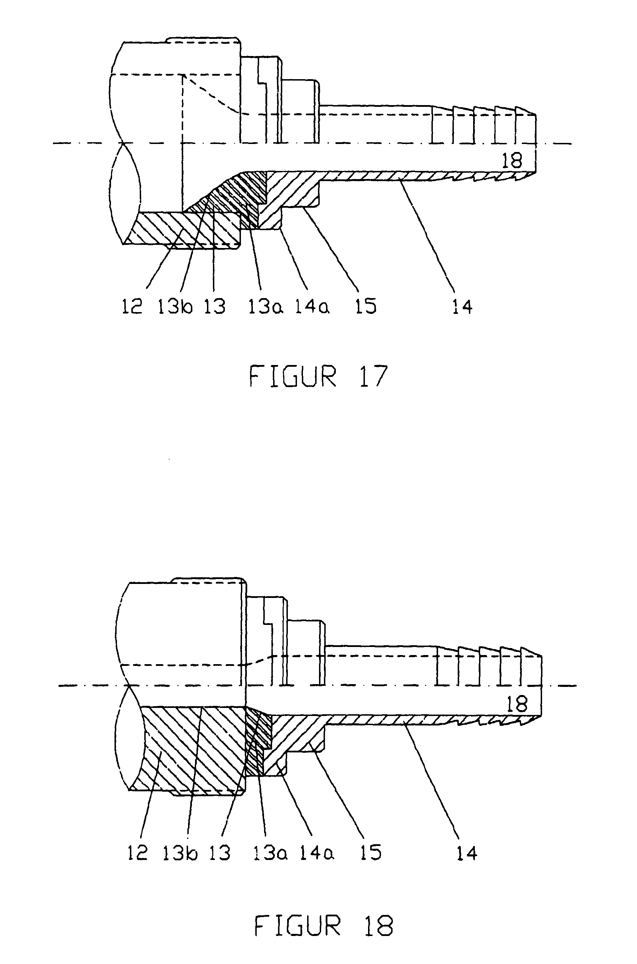

Die Dichtung gemäß Figur 17 weist an der dem zylindrischen Teil der Dichtbuchse abgewandten Seite des Dichtungsflansches eine Zentriereinrichtung auf.

Der Gegenstand der Figur 18 hat eine Dichtung für einen Anschluß an eine durchgehende Anschlußleitung zum Inhalt, deren Durchmesser kleiner ist als derjenige der Tülle.

Am Schlauchanschluß der Tülle ist es von Vorteil, das Ende des zylindrischen, die Finnen zur Sicherung des Schlauches gegen unbeabsichtigtes Lösen von der Tülle tragenden Teils zu verstärken. Hierzu wird die am schlauchseitigen Ende der Tülle angeordnete Finne nicht in voller Länge, sondern lediglich in 1/4 bis 1/2 Länge ausgeführt.

Neben den hier beschriebenen geraden Tüllen sind noch Tüllen üblich, deren Schlauchanschluß um 45° beziehungsweise 90° gebogen ist. Anschlußstutzenseitig ändert sich deren Bauweise gegenüber dem der geraden Tüllen jedoch nicht. Schließlich ist das erfindungsgemäße Bauprinzip des funktionellen Zusammenspiels von Dichtung und Tülle in Verbindung mit deren spezieller Konfiguration auch auf größere Leitungsquerschnitte im Braugewerbe oder der Getränkeherstellung anwendbar.

## Patentansprüche

1. Tüllenanordnung für Schlauchanschlüsse in Getränkeschankanlagen als Verbindungsstück zwischen den Anschlußstutzen (12) der Armaturen und den Leitungen der Anlage, bestehend aus einer Tülle (14) und einer mit der Tülle zusammenwirkenden Dichtung (13), wobei jeweils die Tüllenanordnung (13; 14) mittels eines Befestigungselements mit dem betreffenden Anschlußstutzen (12) der Anlage lösbar verbunden ist und die Konfiguration der Tüllenanordnung (13; 14) an die des Anschlußstutzens (12) der jeweiligen Armatur anpaßbar ist,
**dadurch gekennzeichnet, daß**
die zur Vermeidung von Schmutzfangstellen und Strömungsturbulenzen nötige Anpassung der Teile der Tüllenanordnung (13; 14) an die Konfiguration von Anschlußstutzen (12) beliebigen Fabrikats mit unterschiedlicher Konfiguration und verschieden bemessenen Maßtoleranzen durch Anpassung der Konfiguration der Dichtung (13) geschieht, indem die Dichtung (13) als buchsenförmiger Adapter zwischen dem Anschlußstutzen (12) der Armatur und einem Flansch (14a) der Tülle (14) ausgebildet ist, der Förderkanal (18) der Dichtbuchse (13) im Falle einer Querschnittsänderung zwischen dem Anschlußstutzen (12) und der daran anzuschließenden Leitung konisch (13b) verläuft und die Tülle (14) lediglich einen der Aufnahme des Schlauchs dienenden rohrförmigen Teil sowie einen am anderen Ende des rohrförmigen Teils angeordneten, mit der Dichtbuchse (13) einerseits und dem Befestigungselement andererseits zusammenwirkenden, beidseitig flachen Flansch (14a) aufweist, so daß eine Anpassung der teuer zu fertigenden Tülle (14) entfallen kann und wobei die am Anschlußstutzen (12) getrennt voneinander angeordneten Elemente der Tüllenanordnung (13;14) durch das Befestigungselement zur Wahrung eines glatten Durchgangs innerhalb des Förderkanals (18) über eine Zentriereinrichtung (15;16;17) im Anschlußstutzen (12) versatzfrei zusammengehalten werden.

2. Tüllenanordnung nach Anspruch 1,
**dadurch gekennzeichnet,**
**daß** die Dichtbuchse (13) an einem ihrer Enden einen beidseitig flachen Flansch (13a) aufweist.

3. Tüllenanordnung nach Anspruch 1 oder 2,
**dadurch gekennzeichnet,**
**daß** als Teil der Zentriereinrichtung die Tülle (14):
i) am Flansch (14a) an der dem Schlauchanschluß zugewandten Seite, einen mit dem Befestigungselement zusammenwirkenden Zentrierbund (15) aufweist;
oder
ii) über die Mantelfläche ihres Flansches (14a) am Befestigungselement zentrierbar ausgebildet ist;
oder
iii)über die Mantelfläche ihres Flansches (14a) an der Dichtbuchse (13) zentrierbar ausgebildet ist;
oder
iv) an der dem schlauchseitigen Teil der Tülle (14) abgewandten, mit der Dichtbuchse (13) zusammenwirkenden Seite, einen bundförmigen Ansatz (16) zur Aufnahme der Dichtbuchse aufweist;
oder
v) an der dem schlauchseitigen Teil der Tülle (14) abgewandten, mit der Dichtbuchse (13) zusammenwirkenden Seite, eine nutförmige Vertiefung (17) zur Aufnahme der Dichtbuchse aufweist;
oder
vi) an der dem schlauchseitigen Teil abgewandten, mit der Dichtung (13) zusammenwirkenden Seite eine sacklochartige Vertiefung (17) zur Aufnahme der Dichtbuchse aufweist;
oder
vii)an der dem schlauchseitigen Teil der Tülle (14) abgewandten, mit der Dichtbuchse (13) zusammenwirkenden Seite, eine höckerartige Erhöhung zur Aufnahme der Dichtbuchse aufweist;
wobei
VIII)die Dichtbuchse (13) - soweit sie nicht längs ihrer Mantelfläche im Anschlußstutzen geführt ist - in Verbindung mit einer Führung der Tülle (14, 14a) mit den Merkmalen gemäß i) oder ii) dieses Anspruchs, mittels einer der Zentriereinrichtungen mit den Merkmalen gemäß iv) bis vii) dieses Anspruchs über das Befestigungselement und die Tülle versatzfrei auf den Förderkanal (18) im Anschlußstutzen (12) ausrichtbar ist;
oder
ix) so die Dichtbuchse (13) längs ihrer Mantelfläche im Anschlußstutzen (12) geführt ist, die Tülle (14, 14a) über eine der Zentriereinrichtungen gemäß den Merkmalen iii) bis vii) diese Anspruchs an der Dichtung (13) versatzfrei auf den Förderkanal (18) ausrichtbar ist.

4. Tüllenanordnung nach einem oder mehreren der Ansprüche 1 bis 3, bei der die Tülle an der Dichtung oder am Befestigungselement geführt ist,
**dadurch gekennzeichnet,**
**daß** als Teil der Zentriereinrichtung die Dichtbuchse (13):
an einem ihrer Enden, oder - soweit die Dichtbuchse (13) einen Flansch (13a) aufweist - an der dem zylindrischen Teil der Dichtbuchse (13) abgewandten Seite des Flansches (13a) eine Zentriereinrichtung (16, 17) aufweist, die jeweils mit einer entsprechenden Zentriereinrichtung am Tüllenflansch (14a) zusammenwirkt,
die
i) eine nutartige Vertiefung (16) aufweist;
oder
ii) eine bundartige Erhebung (17) aufweist,
oder
iii)eine sacklochartige Vertiefung (16) zur Aufnahme des Tüllenflansches (14a) (Figur 8) oder zur Aufnahme dessen höckerartigen Erhöhung aufweist;
oder
iv) einen Zentrierbund 17 in Form einer höckerartigen Erhöhung aufweist;
oder
v) die Dichtbuchse (13) längs ihrer Mantelfläche geführt ist.

5. Tüllenanordnung nach einem oder mehreren der Ansprüche 1 bis 4, für die Verwendung an Anschlußstutzen mit Sacklöchern verschiedener, aber in ihren Maßen jeweils bekannter Tiefe, bei der die Tülle (14) an der Dichtung oder am Befestigungselement geführt ist (14a;15),
**dadurch gekennzeichnet,**
**daß** für die Verwendung der Dichtbuchse in einem für Anschlußstutzen mit Sacklöchern verschiedener Tiefe geeigneten Baukastensystem die Länge der Dichtbuchse so bemessen ist, daß sie die Sacklochtiefe des Anschlußstutzens mit der größten Tiefe zumindest um das Maß ihrer longitudinalen elastischen Verformbarkeit übertrifft, und daß für alle Anschlußstutzen für welche das Baukastensystem gelten soll, die Länge der Dichtbuchse gleich bleibt.

6. Tüllenanordnung nach einem der Ansprüche 1 bis 5, für die Verwendung an Anschlußstutzen mit Sacklöchern verschiedener, jedoch in ihren Maßen jeweils bekannter Durchmesser, bei der die Tülle 14 am Befestigungselement geführt ist (14a; 15),
**dadurch gekennzeichnet,**
**daß** für die rationelle Verwendung an mehreren Anschlußstutzen (12) verschiedener Konfiguration der Außendurchmesser der Dichtbuchse (13) dem Durchmesser des engsten Sacklochs entspricht, so daß, bei Verwendung der Dichtbuchse in Sacklöchern größeren Durchmessers, die Dichtbuchse (13) über die Tülle (14) auf den Förderkanal (18) zentriert ausgerichtet im Sackloch des Anschlußstutzens (12) gehalten wird und die Dichtbuchse (13) zumindest mit ihren Stirnflächen, also am Grund des Sacklochs im Anschlußstutzen (12) und am Flansch der Tülle (14) dichtend anliegt, so daß die erforderlichen Abmessungen der Tülle lediglich vom Nenndurchmesser des anzuschließenden Schlauchs bestimmt werden und die Abmessungen der Tülle und der ihr zugeordneten Dichtbuchse im Rahmen eines Baukastensystems typisierbar sind.

7. Tüllenanordnung nach Anspruch 2 mit einer Dichtung (13, 13a) für die Verwendung der Tüllenanordnung am Anschlußstutzen (12) einer Förderleitung durchgehend gleichen Durchmessers - also ohne Sackloch im Anschlußbereich -
**dadurch gekennzeichnet, daß**
die Dichtbuchse (13, 13a) längs der Fläche ihres Außenmantels im Anschlußstutzen (12) der Förderleitung geführt ist und daß die Durchflußöffnung (18) der Dichtbuchse zum Ausgleich einer Querschnittsänderung zwischen der Förderleitung und dem daran anzuschließenden Schlauch in Richtung ihres dem Flansch (13a) entgegengesetzten Endes eine Konizität (13b) aufweist.

8. Tüllenanordnung nach Anspruch 7,
**dadurch gekennzeichnet,**
**daß** der Flansch (13a) der Dichtbuchse (13) an der dem zylindrischen Teil der Dichtbuchse (13) abgewandten Seite eine mit der Tülle (14) zusammenwirkende Zentriereinrichtung (16, 17) gemäß Anspruch 4 aufweist.

9. Tüllenanordnung nach einem der Ansprüche 1 bis 8,
**dadurch gekennzeichnet,**
**daß** als Befestigungselement am Anschlußstutzen eine handelsübliche Überwurfmutter dient, wobei die kopfseitige kreisförmige Öffnung der Überwurfmutter - so sie kleiner ist - an den Durchmesser des Tüllenbundes (15) anzupassen ist.

10. Tüllenanordnung nach den Ansprüchen 1 bis 9 **gekennzeichnet durch** die Verwendung zur Montage an Einzelelemente von Getränkeschankanlagen, als da beispielsweise sind: Hahnen, Regler, Kühleinrichtungen, Druckflaschen, Druckminderer, Manometer und die sie verbindenden Schlauchleitungen.

11. Tüllenanordnung nach einem der Ansprüche 1 bis 10,
**dadurch gekennzeichnet,**
**daß** die endseitige der am zylindrischen Teil der Tülle zur Aufnahme des Schlauchs dienenden Finnen kürzer, zirka 1/4 bis 1/2 der Länge, als die übrigen ausgebildet ist.

## Claims

1. Nipple arrangement for hose connections in beverage dispensing systems as coupling piece between the connecting piece (12) of the fittings and the conduits of the system, comprising a nipple (14) and a seal (13) interacting with the nipple, said nipple arrangement (13, 14) being detachably connected with the respective connecting piece (12) of the system by means of a fixing element and the configuration of said nipple arrangement (13, 14) being adjustable to that of the connecting piece (12) of the respective fitting,
**characterized in**
**that** the adjustment of the parts of the nipple arrangement (13, 14) to the configuration of connecting pieces (12) of any make having varying configurations and varying dimensional tolerances that is required for avoiding dirt trap spots and flow turbulences is effected by means of adjustment of the configuration of the seal (13), wherein the seal (13) is provided as a bushing-shaped adapter between the connecting piece (12) of the fitting and a flange (14a) of the nipple (14), the flow channel (18) of the seal (13) runs conically (13b) in case of a cross-sectional change between the connecting piece (12) and the conduit to be connected to it, and the nipple (14) comprises only a tubular part for receiving the hose as well as a flange (14a) flat on both sides that is arranged on the other end of the tubular part and interacts with the seal (13) on the one side and the fixing element on the other side, so that an adaptation of the expensively manufactured nipple (14) is not required, and wherein the elements of the nipple arrangement (13, 14) separately arranged on the connecting piece (12) are held together by the fixing element free from offset in the connecting piece (12) by means of a centring device (15; 16; 17) in order to guarantee a smooth passage within the flow channel (18).

2. Nipple arrangement according to Claim 1,
**characterized in**
**that** the seal ring (13) has, on one of its ends, a flange (13a) that is flat on both sides.

3. Nipple arrangement according to Claim 1 or 2,
**characterized in**
**that**, as part of the centring device, the nipple (14):
i) has, on the flange (14a) on the side facing the hose connection, a centring collar (15) interacting with the fixing element;
or
ii) is shaped in such a manner that it can be centred on the fixing element by the cylindrical surface of its flange (14a);
or
iii) is shaped in such a manner that it can be centred on the seal ring (13) by the cylindrical surface of its flange (14a);
or
iv) has, on the side facing away from the hose-connection part of the nipple (14) and interacting with the seal ring (13), a collar-shaped projection (16) for receiving the seal ring;
or
v) has, on the side facing away from the hose-connection part of the nipple (14) and interacting with the seal ring (13), a groove-shaped depression (17) for receiving the seal ring;
or
vi) has, on the side facing away from the hose-connection part and interacting with the seal (13), a blind-hole-shaped depression (17) for receiving the seal ring;
or
vii) has, on the side facing away from the hose-connection part of the nipple (14) and interacting with the seal ring (13), a hump-like raising (17) for receiving the seal ring;
wherein
viii) the seal ring (13) - as far as it is not guided along its cylindrical surface in the connecting piece -, in connection with a guide of the nipple (14, 14a) having the features according to i) or ii) of this claim, can be aligned free from offset on the flow channel (18) in the connecting piece (12) by the fixing element and the nipple using one of the centring devices having the features according to iv) to vii) of this claim;
or
ix) when the seal ring (13) is guided along its cylindrical surface in the connecting piece (12), the nipple (14, 14a) can be aligned free from offset on the flow channel (18) by means of one of the centring devices according to the features iii) to vii) of this claim on the seal ring (13).

4. Nipple arrangement according to one or more of Claims 1 to 3 in which the nipple is guided by the seal or by the fixing element,
**characterized in**
**that**, as part of the centring device, the seal ring (13):
on one of its ends or - as far as the seal ring (13) has a flange (13a) - on the side of the flange (13a) facing away from the cylindrical part of the seal ring (13), has a centring device (16, 17) that respectively interacts with a respective centring device on the nipple flange (14a) and that
i) has a groove-like depression (16);
or
ii) has a collar-like projection (17);
or
iii) has a blind-hole-like depression (16) for receiving the nipple flange (14a) (fig.8) or for receiving its hump-like raising;
or
iv) has a centring collar 17 in the form of a hump-like raising;
or
v) the seal ring (13) is guided along its cylindrical surface.

5. Nipple arrangement according to one or more of Claims 1 to 4 for use with connecting pieces with blind holes of varying depths the respective dimensions of which, however, are known, in which the nipple (14) is guided by the seal or by the fixing element (14a; 15),
**characterized in**
**that**, for the use of the seal ring in a modular system suitable for connecting pieces with blind holes of varying depths, the length of seal ring is dimensioned in such manner that it exceeds the depth of the blind hole of the connecting piece with the biggest depth at least by the dimension of its longitudinal elastic ductility and that the length of the seal ring remains the same for all connecting pieces that the modular system shall be applicable to.

6. Nipple arrangement according to one of Claims 1 to 5 for use with connecting pieces with blind holes of varying depths the respective dimensions of which, however, are known, in which the nipple (14) is guided by the fixing element (14a; 15),
**characterized in**
**that**, for an efficient utilization with various connecting pieces (12) of different configurations, the outside diameter of the seal ring (13) corresponds to the diameter of the narrowest blind hole so that, when using the seal ring in blind holes of a larger diameter, the seal ring (13) is held in the blind hole of the connecting piece (12) centred by the nipple (14) to the flow channel (18) and the seal ring (13) provides sealing at least with its faces, i.e. on the bottom of the blind hole in the connecting piece (12) and on the flange of the nipple (14), so that the required dimensions of the nipple are exclusively determined by the nominal diameter of the hose to be connected and the dimensions of the nipple and of the seal ring assigned to it can be standardized within the scope of a modular system.

7. Nipple arrangement according to Claim 2 with a seal (13, 13a) for use of the nipple arrangement on the connecting piece (12) of a conduit of a continuously equal diameter - i.e. without blind hole in the connecting area -
**characterized in**
**that** the seal ring (13; 13a) is guided along the area of its outer surface in the connecting piece (12) of the conduit and that the flow opening (18) of the seal ring has a conical form (13b) in direction of its end opposite to the flange (13a) as compensation for a change of the cross section between the conduit and the hose to be connected to it.

8. Nipple arrangement according to Claim 7
**characterized in**
**that** the flange (13a) of the seal ring (13) is provided, on the side facing away from the cylindrical part of the seal ring (13), with a centring device (16, 17) according to claim 4 interacting with the nipple (14).

9. Nipple arrangement according to one of Claims 1 to 8,
**characterized in**
**that** a standard union nut serves as fixing element to the connecting piece, wherein the circular opening on the head side of the union nut - if it is smaller - is to be adapted to the diameter of the nipple collar (15).

10. Nipple arrangement according to Claims 1 to 9,
**characterized by**
application for mounting to individual elements of beverage dispensing systems, as for example: taps, controllers, cooling devices, pressure cylinders, pressure reducers, manometers and the hose conduits connecting them.

11. Nipple arrangement according to one of Claims 1 to 10,
**characterized in**
**that**, of the fins provided on the cylindrical part of the nipple for receiving the hose, the one located at the end is shorter than the other ones, about ¼ to ½ of the length.

## Revendications

1. Dispositif de passe-câbles destiné à des raccords de tuyau dans un appareil pour débiter des boissons, se présentant sous forme de pièce de jonction entre le manchon de raccordement (12) de tuyauteries et les conduites de l'installation, comprenant un passe-câbles (14) et une garniture d'étanchéité (13) coopérant avec le passe-câbles. Ledit dispositif de passe-câbles (13 ; 14) est chaque fois relié de manière a être déplacé avec ledit manchon de raccordement (12) de la machine à l'aide d'un élément de fixation et la configuration du dispositif de passe-câbles (13 ;14) peut être adaptée à celle du manchon de raccordement (12) de chaque tuyauterie,
**caractérisé en ce que**,
l'ajustement nécessaire des pièces du dispositif de passe-câbles (13 ;14), destiné à éviter les pièges à poussières et les écoulements turbulents, est prévu sur la configuration du manchon de raccordement (12) de n'importe quelle marque avec des configurations différentes et des tolérances dimentionnelles mesurées différemment en ajustant la configuration de la garniture d'étanchéité (13). Ladite garniture d'étanchéité (13) se présente sous forme d'adapteur en forme de douille entre le manchon de raccordement (12) de tuyauteries et une bride (14a) du passe-câbles (14), le canal de transport (18) du manchon d'étanchéité (13) s'étend de manière conique (13b) en cas de
modification de la section entre le manchon de raccordement (12) et la conduite à raccorder audit manchon de raccordement, et le passe-câbles (14) présentant une bride plate (14a) des deux côtés coopérant de part et d'autre avec le manchon d'étanchéité (13) et l'élément de fixation, comportant une pièce tubulaire servant uniquement
au logement du tuyau ainsi qu'un autre disposé à l'autre extrémité de la pièce tubulaire, de telle manière qu'il n'est plus nécessaire d'adapter le passe-câbles (14) cher à fabriquer. De plus, les éléments du dispositif de passe-câbles (13 ; 14) séparés les uns des autres et agencés sur le manchon de raccordement (12) sont maintenus ensemble sans risque de désalignement par un élément de fixation pour maintenir un passage lisse à l'intérieur du canal de transport (18) grâce à un dispositif de centrage (15 ; 16 ; 17) dans le manchon de raccordement (12).

2. Dispositif de passe-câbles selon la revendication 1,
**caractérisé en ce que**,
le manchon d'étanchéité (13) présente une bride plate (13a) des deux côtés sur une de ses extrémités.

3. Dispositif de passe-câbles selon la revendication 1 ou 2,
**caractérisé en ce que**,
le passe-câbles (14) se présentant comme une pièce du dispositif de centrage :
i) comprend un collet de centrage (15) coopérant avec l'élément de fixation sur la bride (14a) tounée vers le raccord de tuyau ;
ou
i) peut être centré sur l'élément de fixation au-dessus de la surface latérale de sa bride (14a) ;
ou
ii) peut être centré sur le manchon d'étanchéité (13) au-dessus de la surface latérale de sa bride (14a) ;
ou
iii) comprend, sur le côté opposé à la pièce du passe-câbles (14) côté tuyau et coopérant avec le manchon d'étanchéité (13), une embase à épaulement (16) pour la réception du manchon d'étanchéité ;
ou
iv) comprend, sur le côté opposé à la pièce du passe-câbles (14) côté tuyau et coopérant avec le manchon d'étanchéité (13), un encastrement à rainures (17) pour la réception du manchon d'étanchéité ;
ou
v) comprend, sur le côté opposé à la pièce côté tuyau et coopérant avec la garniture d'étanchéité (13), un encastrement à trou borgne (17) pour la réception du manchon d'étanchéité ;
ou
vi) comprend, sur le côté opposé à la pièce du passe-câbles (14) côté tuyau et coopérant avec le manchon d'étanchéité (13), une bosse pour la réception du manchon d'étanchéité ;
vii) Ledit manchon d'étanchéité (13), guidé dans la tubulure de raccordement, antant qu'il ne se trouve pas le long de sa surface latérale, peut être orienté sans risque de désalignement par l'élément de fixation et le passe-câbles sur le canal de transport (18) dans le manchon de raccordement (12). Ce but est atteint en combinaison avec un élément de guidage du passe-câbles (14, 14a) ayant les caractéristiques mentionnées aux points i) ou ii) de cette revendication, à l'aide d'un des dispositifs de centrage ayant les caractéristiques mentionnées aux points iv) à vii) de cette revendication :
ou
viii) le manchon d'étanchéité (13), guidé le long de sa surface latérale dans le manchon de raccordement (12), le passe-câbles (14, 14a) peut être orienté sur la garniture d'étanchéité (13) sur le canal de transport (18) sans risque de désalignement par un des dispositifs de centrage ayant les caractéristiques mentionnées aux points iii) à vii),

4. Dispositif de passe-câbles selon une ou plusieurs des revendications 1 à 3, dans lequel le passe-câbles est guidé sur la garniture d'étanchéité ou sur l'élément de fixation,
**caractérisé en ce que**,
le manchon d'étanchéité (13) se présentant comme une pièce du dispositif de centrage :
comprend un dispositif de centrage (16, 17) sur l'une de ses extrémités, autant que le manchon d'étanchéité (13) présente une bride (13a), ou sur le côté de la bride (13a) opposé à la partie cylindrique du manchon d'étanchéité (13), qui à chaque fois coopère avec un dispositif de centrage adéquat sur la bride du passe-câbles (14a).
i) Ce dispositif comprend un encastrement à rainures (16),
ou
ii) une élévation en forme de collerette (17),
ou
iii) un encastrement à trou borgne (16) pour le logement de la bride du passe-câbles (14a) (figure 8) ou pour le logement de son élévation en forme de bosse,
ou
iv) un collet de centrage (17) en forme de bosse,
ou
v) le manchon d'étanchéité (13) est guidé le long de sa surface latérale

5. Dispositif de passe-câbles selon une ou plusieurs des revendications 1 à 4, en vue de l'utilisation sur la tubulure de raccordement avec des trous borgnes de différentes profondeurs, dont les dimensions sont chaque fois connues, dans lequel le passe-câbles (14) est guidé sur la garniture d'étanchéité ou sur l'élément de fixation (14a ; 15),
**caractérisé en ce que**,
pour l'utilisation du manchon d'étanchéité dans un système modulaire approprié pour manchon de raccordement avec des trous borgnes de différentes profondeurs, la longueur du manchon d'étanchéité est mesurée de façon à ce qu'elle dépasse la profondeur du trou borgne du manchon de raccordement par rapport à la profondeur maximum quant à sa déformabilité longitudinale élastique et que, la longueur du manchon d'étanchéité se maintienne pour tous les manchons de raccordement pour lesquels le système modulaire doit être appliqué.

6. Dispositif de passe-câbles selon une des revendications 1 à 5 pour une utilisation sur la tubulure de raccordement avec des trous borgnes de différents diamètres, dont les dimensions sont chaques fois connues, dans lequel le passe-câbles 14 est guidé sur l'élément de fixation (14a ; 15),
**caractérisé en ce que**,
pour l'utilisation rationnelle sur plusieurs manchons de raccordement (12) de différentes configurations, le diamètre extérieur de la garniture d'étanchéité (13) correspond au diamètre du trou borgne le plus étroit de telle sorte que, lors de l'utilisation de la garniture d'étanchéité dans des trous borgnes de diamètre plus grand, ladite garniture d'étanchéité (13), étant fixé (12) au-dessus du passe-câble (14) sur le canal de transport (18), est maintenue dans le trou borgne du manchon de raccordement (12). Dispositif de passe-câbles **caractérisé en ce qu'**au moins la face frontale de la garniture d'étanchéité (13) adhère uniformément dans le manchon de raccordement (12) et à la bride du passe-câbles (14), c'est-à-dire à la base du trou borgne, afin que les dimensions nécessaires du passe-câbles soient déterminées uniquement par le diamètre nominal du tuyau à raccorder et que les dimensions du passe-câbles et de son manchon d'étanchéité correspondante puissent être classées par types dans le cadre d'un système modulaire.

7. Dispositif de passe-câbles selon la revendication 2, comprenant une garniture d'étanchéité (13, 13a), destiné à l'utilisation du dispositif de passe-câble sur le manchon de raccordement (12) d'un conduit de transport direct de même diamètre, c'est-à-dire sans trou borgne dans la zone de raccordement,
**caractérisé en ce que**,
le manchon d'étanchéité (13, 13a) est guidée le long de la bride de sa surface frontale dans le manchon de raccordement (12) du canal de transport. Le dispositif de passe-câbles est **caractérisé en ce que** l'ouverture utile (18) du manchon d'étanchéité présente une conicité (13b) pour compenser une
modification de la section entre le canal de transport et le tube à raccorder audit canal de transport en direction de son extrémité dans le sens opposé à la bride (13a).

8. Dispositif de passe-câbles selon la revendication 7,
**caractérisé en ce que**,
la bride (13a) du manchon d'étanchéité (13) comprend, selon la revendication 4, un dispositif de centrage (16, 17) coopérant avec le passe-câbles (14) sur le côté opposé de la partie cylindrique du manchon d'étanchéité (13).

9. Dispositif de passe-câbles selon les revendications 1 à 8,
**caractérisé en ce qu'**
un écrou-raccord courant sert d'élément de fixation au manchon de raccordement, ledit écrou-raccord présentant une ouverture circulaire côté tête, ladite ouverture, si elle est plus petite, doit être ajustée au diamètre du collet du passe-câbles (15).

10. Dispositif de passe-câbles selon les revendications 1 à 9 **caractérisé par** l'utilisation en vue du montage d'éléments individuels d'appareils pour débiter des boissons étant par exemple : des robinets, un régulateur, des dispositifs de refroidissement, des flacons à pression, un réducteur de pression, un manomètre et les conduites en tuyaux souples les raccordant.

11. Dispositif de passe-câbles selon les revendications 2 à 10,
**caractérisé en ce que**
l'extrémité de la spirale anti-flambage, placée sur la partie cylindrique du passe-câble et servant à la réception du tuyau flexible, est plus courte que les autres, d'environ ¼ à ½ de longueur.
